# EUROPEAN PATENT SPECIFICATION

(11) **EP 2 344 315 B1**
(45) Date of publication and mention of the grant of the patent: **26.06.2013**
(21) Application number: 09810777.4
(22) Date of filing: 07.10.2009
(51) Int. Cl.: B29C 41/04, B32B 27/20, B32B 27/40, C08K 3/02, C08K 3/08, C08L 75/04, C08L 75/06, C08L 75/08

(54) **COMPOSITE MATERIAL DETECTABLE BY A METAL DETECTOR, ARTICLE OF SAID MATERIAL AND METHOD FOR OBTAINING SUCH AN ARTICLE**
DURCH EINEN METALLDETEKTOR DETEKTIERBARES VERBUNDMATERIAL, ARTIKEL AUS DEM MATERIAL UND VERFAHREN ZUM ERHALT SOLCH EINES ARTIKELS
MATERIAU COMPOSITE DÉTECTABLE AVEC UN DETECTEUR DE MÉTAL, ARTICLE EN UN TEL MATERIAU ET PROCÉDÉ POUR UN TEL ARTICLE.

(30) Priority: 07.10.2008 IT BO20080612
(43) Date of publication of application: 20.07.2011
(73) Proprietor: P.r. Nastri Trasportatori S.n.c. Di Rubino Vincenzo&Rubino Attilio, 40011 Anzola Emilia (BO) (IT)
(72) Inventor: RUBINO, Attilio, I-40011 Anzola Emilia (BO) (IT)
(74) Representative: Dall'Olio, Giancarlo
(86) International application number: PCT/IB2009/007057
(87) International publication number: WO 2010/041121

(56) References cited:
- WO-A-2006/026823
- DE-U1- 20 208 052
- US-A- 2 655 195
- US-A- 6 001 440
- US-B1- 6 177 113
- BODI A ET AL: "USING SPECIAL EFFECTS IN ROTOMOLDING APPLICATIONS" PLASTICS ENGINEERING, SOCIETY OF PLASTICS ENGINEERS,INC. GREENWICH, CONN, US, vol. 55, no. 6, 1 June 1999 (1999-06-01), pages 45-48, XP000969292 ISSN: 0091-9578
- HARKIN-JONES E ET AL: "ROTATIONAL MOLDING OF LIQUID PLASTIC SYSTEMS: AN ASSESSMENT OF MATERIAL MOLDABILITY" ADVANCES IN POLYMER TECHNOLOGY, WILEY AND SONS, HOBOKEN, NJ, US, vol. 15, no. 1, 21 March 1996 (1996-03-21) , pages 71-100, XP000548267 ISSN: 0730-6679

## Description

### TECHNICAL FIELD

The invention relates to the field of composite material which can be detected by a metal detector, comprising a first plastic material and a magnetisable, magnetised or metal material.

### BACKGROUND ART

At present, in production and packing lines of food or pharmaceutical products there are plastic elements which have the aim of intercepting, conveying or containing foods or pharmaceutical products in transit along the line. These plastic elements are continually in contact (intercepting, impact, dragging etc.) with the transiting product or the passing product, especially in continuous-cycle lines functioning for twenty-four hours a day. Therefore the plastic elements are subject to wear and possible breakage, and as a consequence some fragments thereof can be dragged by the foods and get inside the finished food product or in the packing thereof. In order to detect these fragments and to reject the contaminated product, attempts to modify the composition of the plastic elements have been made, by inserting a component which is detectable by metal detectors, effectively using the same detecting system already used in the food and pharmaceuticals sector for tracing any metal fragments present.

United States patent US6177113, for example, describes a composite material which is detectable by a metal detector, comprising a plastic or elastomer material in which a metal particulate is included or dispersed. The percentage of metal particulate present can vary from 1% to 5%. US6177113 cites the following usable plastic or elastomer materials: polyoxymethylene copolymer (such as acetalic copolymer), polyphenylene sulphide (PPS), butadiene-acrylonitrile rubbers, and natural rubbers such as viatran, nitran and neoprene. The metal particulate can also be constituted by stainless steel powder. The only embodiment illustrated in US6177113 relates to a sulphuric polyphenol which also contains high percentages of additives. Indeed about 20% of glass fibre is present. The composite material obtainable can be used in seals and seal rings.

Publication WO 00/77528 describes a composite and elastomer material containing metal particles, which can be detected by a metal detector. The percentage of metal particles varies from 0.25% to 50%, and is preferably 2%. The metal can be an iron, nickel and molybden alloy. The composite material obtainable is preferably used in diaphragms, and pump seals used in the food industry. In WO 00/77528 there is presented no example of elastomer material to be used in reproducing the invention, leaving the expert in the field the task of performing a multiplicity of formulations and operatively testing both the productive attainability and the suitability of the final composite material element for a specific use.

Publication WO 03/045655 describes a composite material comprising: a plastic material and a powder-form magnetisable material dispersed in the plastic material. The fragments of the composite material are detectable by a metal detector and can be separated from the foods using appropriate magnets. In the embodiments described, polyester resins, polypropylene resins and magnetite are used. In the illustrated embodiments the composite material includes high quantities of additives (10-49%) or recourse is made to plastic raw materials which already contain additives. A further disadvantage of the technical solution of WO 03/045655 is that it is applicable only to powder foods in the form of granules or liquids.

Publication WO 03/076476 describes a composite material comprising latex and chrome oxide, which can be detected by a metal detector. The latex can be nitrile, natural rubber, polyurethane and polychloroisoprene. WO 03/076476 contains only embodiments using nitrile and natural rubber latex. The obtainable composite material is suitable for manufacturing latex gloves for handling foods or pharmaceuticals, as any fragments which can be generated are detectable by metal detector.

WO 06/026823 describes a composite material comprising a plastic material in which a particulate is dispersed, the particulate being constituted by a magnetic mineral in percentages that vary from 10% to 50%. The particulate can be constituted by magnetite or by ferro-magnetic ceramic materials.

The fragments of the composite material are detectable by metal detector and can be eliminated using appropriate magnets.

The illustrated embodiments in WO 06/026823 use polypropylene for realising drawers, polyethylene for plastic films and polyurethane for seals and general pressed elements. In particular, in the third example, magnetite (35%), a liquid polyurethane rubber (55%) and other additives (10%) are used. The type of polyurethane used is not given, nor are the components (diisocyanate and polyol) with which they are obtained.

Although some documents indicate specific compositions of the composite material which can be detected by metal detector, at present the known composite materials are not used in the food and/or pharmaceutical industries.

There is therefore a need for a composite material comprising a magnetisable, magnetised or metal material which can be used for realising plastic material elements in production lines or packing lines for foods and pharmaceutical substances. Specially appropriate is a composite material having a greater resistance to wear and fragmentation, which, should fragments be created, can be detected by metal detector.

### DISCLOSURE OF INVENTION

The aim of the present invention is to provide the composite materials and a method for manufacturing articles using the composite material.

The above aims are obtained with two embodiments of a composite material according to the invention and with the proposed method for realising the articles made of the composite material

In the first embodiment the composite material comprises a first plastic material and particles of magnetisable, magnetised or metal particles and at least a first layer in the first plastic material in which the particles of magnetisable, magnetised or metal are sunk. The first layer identifies a first surface and a second surface which is opposite the first surface, and has a gradient of density of the magnetisable, magnetised or metal particles which grows progressively from the first surface to the second surface. The material of the particles is stainless steel.

In the second embodiment the composite material comprises a first plastic material and particles of magnetisable, magnetised or metal particles. The percentage of the weight of the magnetisable, magnetised or metal material in the composite material is comprised between 1 to 50%, preferably 1 to 15% and even more preferably 1 to 10%, and is calculated as a percentage of the weight of magnetisable, magnetised or metal material with respect to the weight of the composite material; and the first plastic material is polyurethane obtained by reaction between a diisocyanate and a compound selected from between polyester and polyether and at least a curing agent. The magnetisable, magnetised or metal material is stainless steel. A type of steel which can be used for production of the composite material of the invention is martensitic stainless steel, which is magnetisable.

The curing agent is preferably a compound selected from a group consituted by ester, add and glycol, in particular adipic add, ethylene glycol (cas number 107-21-1) and 2-ethyl-2-(hydroxymethyl) - 1.3 propandiole (cas number 77-99-6).

The articles made of composite material in the second embodiment can also be obtained by dropping or by injection.

The articles comprising the composite materials of the two embodiments of the invention can be applied in production lines of foods and/or pharmaceutical substances, as conveyors, rollers, washers, sleeves, bibs tubes, transmission chains and belts, in particular conveyor belts, etc.

The plastic articles made of composite material of the invention are also advantageous, in particular in the first embodiment thereof. These articles can be made by rotational moulding (also known as centrifugal moulding) or by injection moulding or by dropping into moulds of composite material in the non-filled state.

The composite material articles of the first embodiment are produced with the following method which comprises the use of an apparatus for rotational moulding and which includes:
a) inserting a mixture into the apparatus, the mixture being in liquid, granular or powder form, comprising a first plastic material and particles of magnetisable, magnetised or metal material;
b) setting the mixture in rotation up to a solidification thereof, to define a corresponding hollow article made of the composite material;
c) extracting the hollow article made of the composite material, obtained at the end of stage b), from the apparatus.

The hollow articles are advantageously cut to obtain articles of predetermined size and shape.

The technical expert in the field will clearly understand that the insertion of the mixture in stage a) can be performed both by obtaining the mixture and inserting the mixture in the apparatus, and by first introducing a component (for example the first plastic material) in the apparatus and then the others (for example the of magnetisable, magnetised or metal material). In this case the mixing inside the apparatus will be done with a bland mixing.

For the purposes of the present invention, in the description and claims the term "particles" refers to finely-subdivided solid material, in the present case powder, granules, particulate and small bodies.

The term "plastic materials relates to a natural or synthetic resin.

The term "operative internal surfaces of an apparatus for rotational moulding, reference is made to the surface of the apparatus on which the plastic material deposits by effect of the centrifugal force following rotational moulding. The term "curing agents" relates to polymerisable polyfunctional monomer molecules, which can join chains of different polymers together.

### BRIEF DESCRIPTION OF THE DRAWINGS

Figure 1 is a perspective view of a hollow articles made of single-layer composite material in accordance with the first embodiment of the invention;
Figure 2 is a perspective view of the hollow article of figure 3 after it has been cut;
Figure 3 is a schematic perspective view of a portion of a flat article made of single-layer composite material in accordance with the first embodiment of the invention;
Figure 4 is a schematic perspective view of a portion of flat articles made of multi-layer composite material in accordance with the first embodiment of the invention.

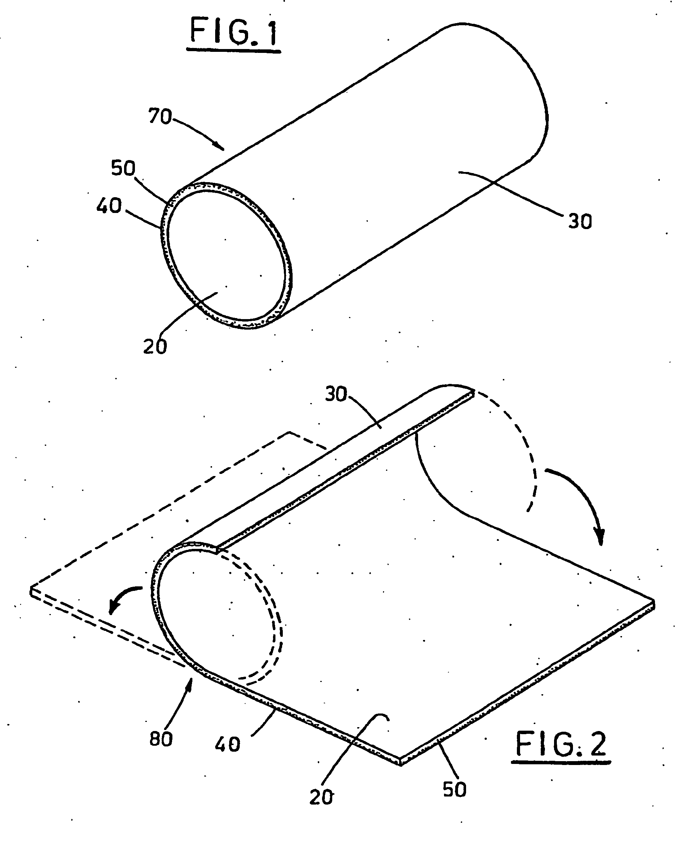

In figures 1-4, the components which are the same are designated using the numerical reference of the following description in the various embodiments of the invention and relate to similar characteristics unless otherwise indicated.

### BEST MODE FOR CARRYING OUT THE INVENTION

Using the rotational moulding method, the materials found in the apparatus destined for rotational moulding are subjected to various centrifugal forces proportional to the mass thereof. Since the particles 40 of magnetisable, magnetised or metal material have a greater mass than the first plastic material, during the production process of the hollow article 70 the particles 40 are distributed less at a first internal surface 20 of the hollow article 70 (shown in figure 1). The particles 40 are arranged preferentially at a second external surface 30 of the hollow article 70 which is in contact with the internal operating wall of the apparatus. During solidification of the plastic material the particles 40 will be trapped in the position they are in. It follows that the layer of composite material constituting the hollow article 70 thus obtained will be characterised by a density gradient of the particles 40 of magnetisable, magnetised or metal material which increases progressively from the first surface 20 to the second surface 30.

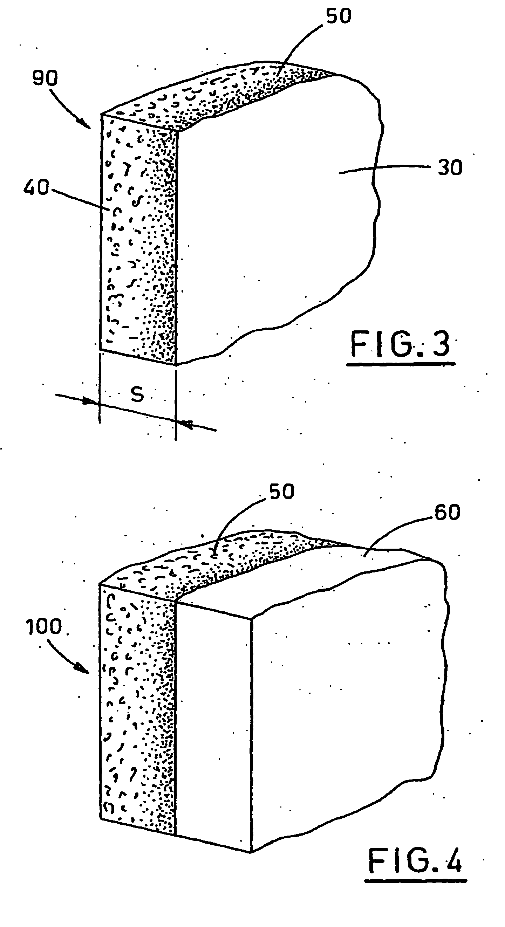

Figure 3 shows a portion of a flat article 90 constituted by a single layer of composite material according to the invention in which the thickness S of the article is magnified with respect to the normal proportions and in which the arrangement of the particles 40 of magnetisable, magnetised or metal material is highlighted. The flat article 90, obtained by cutting the hollow article 70 of figure 1 and by flattening the cut article 80 of figure 2 is characterised in that it has a gradient of concentration of the particles 40 of magnetisable, magnetised or metal material which grows from the first surface 20 to the second surface 30. Advantageously the first surface 20 will be placed in contact with foodstuffs and/or pharmaceutical products, as in the first surface 20 the density of magnetisable, magnetised or metal material is minimal, thus reducing the probability that the particles 40 of magnetisable, magnetised or metal material might contaminate the foodstuffs and/or pharmaceutical products.

Further, the surface 30 is more easily constrainable to metal structures, which constitute the predominant part of the food and pharmaceutical production lines. The surface 30 is more easily and solidly weldable to metal structures after roughening, sanding, pre-sanding of the surface.

In some cases the conformation of the intercept, conveying or containing elements in the foodstuff and/pharmaceutical production lines can be such that the foodstuffs and/or pharmaceuticals enter into contact with and also solicit the second surface 30 of the layer 50 of composite material in accordance with the first embodiment of the invention. The density of the particles 40 of magnetisable, magnetised or metal material is at a maximum in the second layer 30.

Thus, in order to minimize the probability of contamination, it is advantageous to use a composite material of a variant of the first embodiment in which an auxiliary layer 60 comprising an auxiliary plastic material, solidly anchored to the second surface 30 of the first layer 50. Figure 4 illustrates a portion of a flat article 100 constituted by the multi-layer composite material in which the thicknesses of both layers are exaggeratedly enlarged.

The auxiliary plastic material of the auxiliary layer 60 is advantageously equal to the first plastic material of the first layer 50 and preferably both are made of polyurethane.

Also advantageous is the production method of a hollow article made of multilayer composite material.

The first variant of the method further includes following stage a') preceding stage a).
a') inserting an auxiliary plastic material in a liquid, granular or powder form into the apparatus, the auxiliary plastic material being suitable for being stably constrained to the composite material at the second surface (30) thereof; setting the auxiliary plastic material in rotation; solidifying the auxiliary plastic material.

The second variant of the method for obtaining an multi-layer composite material which is alternative to the preceding variant, further comprises the following stages d), e) and f), following stage c):
d) cutting the hollow article 70 made of composite material extracted in stage c) in order to obtain a cut article 80 made of a single-layer composite material;
e) inserting the cut article 80 made of single-layer composite material internally of the apparatus, causing the first surface 20 of the single-layer composite material to adhere to the internal operating surface of the apparatus;
f) inserting, in the apparatus, an auxiliary plastic material in a liquid, granular or powder form, the auxiliary plastic material being suitable for being stably constrained to the composite material at the second surface 30 of the composite material; setting the auxiliary plastic material in rotation and solidifying the auxiliary plastic material.

As already mentioned, a flat article 80, 90, 100 made of composite material according to the invention can be made from the above-described hollow article by cutting of the hollow article 70, obtaining articles of a predetermined size and shape.

Thus a method according to the invention advantageously further comprises following stage g) after stage c) or stage f):
a) cutting the hollow article 70 in order to obtain articles of a predetermined size and shape 80, 90, 100.

Preference is for composite materials of the first embodiment in which the percentage of the magnetisable, magnetised or metal material of the first layer is comprised between 1-50%, preferably 1-15%, even more preferably 5-15%, calculated as a percentage of the weight of the magnetisable, magnetised or metal material with respect to the composite material weight.

The magnetisable, magnetised or metal material is stainless steel, preferably martensitic stainless steel. In the preferred embodiments reported herein below, AISI 410 stainless steel in powder form is used, known as Powder Stainless Steel 410L by its producer.

For formulation of the composite material of the invention in both embodiments, it is preferable to use polyurethane as first plastic material and optionally as auxiliary plastic material, in particular if obtained by reaction of a diisocyanate, in particular 4-4'-diphenylmethane diisocyanate (cas number 101-68-8), a compound selected from between polyester or polyether and at least a curing agent.

The curing agent is preferably a compound selected from the group constituted by ester, acid and glycol, in particular adipic acid, ethylene glycol (cas number 107-21-1) and 2-ethyl-2-(hydroxymethyl)-1.3-propanediol (cas number 77-99-6).

Particularly preferred is a composite material in which the first plastic material is polyurethane with ether bonds as it has been shown to be better resistant to moisture and heat and has a better antibacterial/bacteriostatic performance, and is therefore particular preferred in the realising of plastic elements for liquid or food production lines with the food has a high moisture content, or in production lines which operate at high temperature, such as in the case of product conveyor lines exiting from ovens, kilns, dryers and the like.

It follows that in both embodiments of the invention and the relative variants, particularly advantageous is a composite material in which the polyurethane is obtained by reaction between diphenylmethane diisocyanate, in particular 4-4'-diphenylmethane diisocyanate, a polyether and at least a curing agent.

Specially suitable are composite materials of the invention having a hardness of 88-92 Shore, preferably comprised between 60 and 92 shore, especially if the first plastic material is polyurethane, as they can be heat-welded, enabling easy production of separation plugs in belts for cogged or smooth conveyors, smooth or cogged transmission chains or the like.

Thus, particularly preferred are composite materials of the invention in which 2-ethyl-2-(hydroxymethyl)-1.3-propandiol is not used as a curing agent.

To increase the resistance and tenacity of an article comprising the composite material of the invention a reinforcement element can be inserted, which can be made of a textile or a knit tissue internally of the first layer 50 or the auxiliary layer 60 by being sunken into the first plastic material or the auxiliary plastic material. The insertion of the reinforcement element can be done when the composite material is not completely filled or solidified. Alternatively the textile or knit tissue can be inserted along the surface 30, 20 of the first layer or along a surface of the auxiliary layer. This can be done using glue, for example a polyurethane glue.

Composite materials according to the invention are preferred which comprise a reinforcement element, for example a textile, a knit tissue or woven reinforcing, wires or cables. This textile, knit tissue or woven wires or cables are preferably made of a material comprising a compound selected from among polyester, nylon, steel, carbon fibre and Kevlar fibre. It follows that particularly preferable are articles at least partly comprising a composite material of the invention and a textile, a knit tissue or woven reinforcement wires and cable, in particular for cogged or smooth belt conveyors, cogged or smooth transmission chains.

A preferred embodiment of the method of the invention enables obtaining the articles and comprises a further stage of inserting the reinforcing element, which can be a textile and/or a knit tissue, internally of the apparatus destined for rotational moulding, by arranging the reinforcing element along the internal operating surface of the apparatus. Alternatively the articles comprising, at least in part, a composite material according to the invention and a reinforcing element, can be made by spreading or resining the composite material of the invention, not yet filled, on the reinforcing element realised in the above-cited materials. In the case of spreading, the thicknesses of the composite material can be obtained at around 0.1-5 mm, while with resining the composite material is sunken into the interstices of the reinforcing element.

A further method for obtaining the articles consists in coupling a layer (for example in the order of 0.1-5 mm) of the composite material of the invention when already filled and the reinforcing element through heat and pressure (using, for example, two opposite heated and counter-rotating cylinders, or a calender) or by pressure and an adhesive means (for example using two opposite and counter-rotating cylinders or a calender and a polyurethane glue).

### Examples.

Various types of single-layer composite material have been obtained by rotational moulding using the above-described method, in which the first plastic material is polyurethane.

In formulation A stainless steel has been used, and a polyurethane obtained by reaction among 4-4'-diphenylmethane diisocyanate, polyether, 1.4 butandiol and 2-ethyl-2-(hydroxymethyl)-1.3-propanediol.

In formulation B stainless steel has been used, and a polyurethane obtained by reaction among 4-4'-diphenylmethane diisocyanate, polyester, 1.4 butandiol and 2-ethyl-2-(hydroxymethyl)-1.3-propanediol.

Powdered stainless steel 410L was used in all the above formulations, having the following composition:

| Composition of powdered stainless steel 410L - dimension 45 µm | |
|---|---|
| Component | % |
| Mo | Max 3% |
| Ni | Max 3% |
| Mn | Max 1% |
| Cr | 10-37% |
| Si | Max 4% |
| Nb | Max 1% |
| Fe | QB at 100% |

This type of steel is otherwise known as AISI 410 steel and is martensitic and magnetisable.

The thickness of the flat articles obtained with single-layer composite materials with the above-cited formulations is 3 mm thick.

Circular test articles have been produced, which have been made to pass into the detection zone of a metal detector already in use in food production lines. The results obtained are reported in the following table.

| Sample number | Formulation | % of steel in composite material | Test piece diameter (mm) | Result of detection using metal detector |
|---|---|---|---|---|
| 1 | A | 5 | 20 | Detected |
| 2 | A | 10 | 15 | Detected |
| 3 | A | 15 | 6 | Detected |

As can be seen from the reported results, a composite material has been obtained containing particles of magnetisable, magnetised or metal particles which can be advantageously used in food and/or pharmaceutical production lines due to the fact that any fragments of the material are detectable by metal detectors already in use on the said lines.

Further, the composite material, in which the prime plastic material is polyurethane obtain by reaction among 4-4'-diphenylmethane diisocyanate, a polyether and at least a curing agent, exhibits a greater resistance to moisture and heat. Consequently wear and fragmentation of the material are less probable and in any case if wear should obtain the fragments of the composite material would be detected by the metal detectors present along the food or pharmaceutical production lines. This would enable appropriate corrective actions to be taken to prevent contamination of the final food or pharmaceutical product.

## Claims

1. A composite material comprising a first plastic material and particles (40) of magnetisable, magnetised or metal material, **characterised in that** it includes at least a first layer (50) of the first plastic material in which the particles (40) of magnetisable, magnetised or metal material are sunk, the first layer (50) exhibiting a first surface (20) and a second surface (30) opposite the first surface (20), the first layer (50) having a density gradient of the particles (40) of magnetisable, magnetised or metal material, which gradient increases in a direction from the first surface (20) to the second surface (30), wherein the magnetisable, magnetised or metal material is stainless steel.

2. The composite material of claim 1, **characterised in that** it comprises an auxiliary layer (60) comprising an auxiliary plastic material, solidly anchored to the second surface (30) of the first layer (50).

3. The composite material of claim 2, wherein the auxiliary plastic material of the auxiliary layer (60) is identical to the first plastic material of the first layer (50).

4. The composite material of any one of claims 1 to 3, wherein a percentage of the particles (40) of magnetisable, magnetised or metal material of the first layer (50) is comprised between 1 to 50%, preferably 5 to 15%, calculated as a weight of the particles (40) of magnetisable, magnetised or metal material divided by a weight of the composite material.

5. The composite material of any one of claims 1 to 4, wherein the magnetisable, magnetised or metal material is martensitic stainless steel.

6. The composite material of any one of claims 1 to 5, wherein the first plastic material of the first layer (50) and optionally the auxiliary material of the auxiliary layer (60) is polyurethane.

7. The composite material of claim 6, wherein the polyurethane is obtained by reaction between 4-4'-diphenylmethane diisocyanate, a compound selected from between polyether and polyester and at least a curing agent.

8. A plastic article made of the composite material of any one of claims 1 to 7.

9. A method for obtaining articles (70) made of the composite material of claims from 1 to 8, wherein an apparatus is used for rotational moulding, **characterised in that** it comprises stages of:
a) inserting a mixture into the apparatus, the mixture being in liquid, granular or powder form, comprising a first plastic material and particles (40) of magnetisable, magnetised or metal material;
b) setting the mixture in rotation up to a solidification thereof, to define a corresponding hollow article (70) made of the composite material;
c) extracting the hollow article (70) made of the composite material, obtained at the end of stage b), from the apparatus.

10. An article comprising a reinforcing element, further at least partially comprising a composite material as in claims from 1 to 7.

11. The article of the preceding claim, wherein the reinforcing element is a textile, a knit tissue or woven wires or cables, and in which the reinforcing element is made of polyester, nylon, steel, carbon fibre or Kevlar fibre.

12. The article of any one of claims from 10 to 11, comprising a transmission belt.

13. The article of any one of claims from 10 to 11, comprising a belt, in particular a belt for a conveyor, which can be cogged or smooth.

14. The article of any one of claims from 10 to 11, obtained by rotational moulding by arranged the reinforcing element along the internal operating surface of an apparatus for rotational moulding.

## Patentansprüche

1. Verbundmaterial, das ein erstes Kunststoffmaterial und Partikel (40) aus magnetisierbarem, magnetisiertem oder metallischem Material beinhaltet, **dadurch gekennzeichnet, dass** es zumindest eine erste Schicht (50) aus dem ersten Kunststoffmaterial beinhaltet, in dem die Partikel (40) aus magnetisierbarem, magnetisiertem oder metallischem Material eingelassen sind, wobei die erste Schicht (50) eine erste Oberfläche (20) und eine zweite Oberfläche (30) aufweist, die der ersten Oberfläche (20) gegenüber liegt, wobei die erste Schicht (50) einen Dichtegradienten der Partikel (40) aus magnetisierbarem, magnetisiertem oder metallischem Material aufweist, der in einer Richtung von der ersten Oberfläche (20) zu der zweiten Oberfläche (30) hin ansteigt, und worin das magnetisierbare, magnetisierte oder metallische Material ein nichtrostender Stahl ist.

2. Verbundmaterial nach Anspruch 1, **dadurch gekennzeichnet, dass** es eine zusätzliche Schicht (60) beinhaltet, die ein zusätzliches Kunststoffmaterial beinhaltet, das fest an der zweiten Oberfläche (30) der ersten Schicht (50) verankert ist.

3. Verbundmaterial nach Anspruch 2, worin das zusätzliche Kunststoffmaterial der zusätzlichen Schicht (60) identisch mit dem ersten Kunststoffmaterial der ersten Schicht (50) ist.

4. Verbundmaterial nach einem der Ansprüche 1 bis 3, worin ein Prozentanteil der Partikel (40) aus magnetisierbarem, magnetisiertem oder metallischem Material der ersten Schicht (50) zwischen 1 und 50%, vorzugsweise zwischen 5 und 15%, beträgt und berechnet wird aus dem Gewicht der Partikel (40) aus magnetisierbarem, magnetisiertem oder metallischem Material geteilt durch das Gewicht des Verbundmaterials.

5. Verbundmaterial nach einem der Ansprüche 1 bis 4, worin das magnetisierbare, magnetisierte oder metallische Material ein martensitischer nichtrostender Stahl ist.

6. Verbundmaterial nach einem der Ansprüche 1 bis 5, worin das erste Kunststoffmaterial der ersten Schicht (50) und optional das zusätzliche Material der zusätzlichen Schicht (60) Polyurethan ist.

7. Verbundmaterial nach Anspruch 6, worin das Polyurethan durch eine Reaktion von Diphenylmethan-4,4'-diisocyanat mit einer zwischen Polyether und Polyester ausgewählten Verbindung und zumindest einem Aushärtungsmittel erhalten wird.

8. Kunststoffartikel, hergestellt aus dem Verbundmaterial nach einem der Ansprüche 1 bis 7.

9. Verfahren zum Erhalt von Artikeln (70), die aus dem Verbundmaterial nach den Ansprüchen von 1 bis 7 hergestellt sind, worin eine Vorrichtung für das Rotationsformen eingesetzt wird, **dadurch gekennzeichnet, dass** es folgende Schritte beinhaltet:
a) Eingeben eines Gemischs in die Vorrichtung, wobei dieses Gemisch in flüssiger, körniger oder pulveriger Form vorliegt und ein erstes Kunststoffmaterial sowie Partikel (40) aus magnetisierbarem, magnetisiertem oder metallischem Material beinhaltet;
b) Versetzen des Gemischs in eine Rotationsbewegung, bis sich das Gemisch verfestigt, um einen entsprechenden hohlen Artikel (70) zu bilden, der aus dem Verbundmaterial besteht;
c) Entformen des hohlen Artikels (70), der aus dem Verbundmaterial besteht und am Ende von Schritt b) erhalten wird, aus der Vorrichtung.

10. Artikel, der ein Verstärkungselement beinhaltet und ferner zumindest teilweise ein Verbundmaterial nach den Ansprüchen von 1 bis 7 beinhaltet.

11. Artikel nach dem vorhergehenden Anspruch, worin das Verstärkungselement ein textiles Gewebe, ein Gewirke oder ein Gewebe aus Drähten oder Strängen ist, und worin das Verstärkungselement aus Polyester, Nylon, Stahl, Kohlenstoff-Faser oder Kevlar-Faser besteht.

12. Artikel nach einem der Ansprüche von 10 bis 11, der ein Transmissionsriemen beinhaltet.

13. Artikel nach einem der Ansprüche von 10 bis 11, der einen Riemen oder ein Band beinhaltet, insbesondere einen Riemen oder ein Band für eine Fördereinrichtung in gezahnter oder glatter Ausführung.

14. Artikel nach einem der Ansprüche von 10 bis 11, der durch Rotationsformen erhalten wird, indem das Verstärkungselement entlang der inneren Arbeitsoberfläche einer Vorrichtung für das Rotationsformen angeordnet wird.

## Revendications

1. Un matériau composite comprenant un premier matériau plastique et des particules (40) de matériau magnétisable, magnétisé ou métallique, **caractérisé en ce qu'**il comprend au moins une première couche (50) dudit premier matériau plastique dans lequel les particules (40) de matériau magnétisable, magnétisé ou métallique sont noyées, la première couche (50) présentant une première surface (20) et une deuxième surface (30) opposée à la première surface (20), la première couche (50) ayant un gradient de densité des particules (40) de matériau magnétisable, magnétisé ou métallique, ledit gradient allant croissant de la première surface (20) à la deuxième surface (30), où ledit matériau magnétisable, magnétisé ou métallique est de l'acier inoxydable.

2. Le matériau composite selon la revendication 1, **caractérisé en ce qu'**il comprend une couche auxiliaire (60) comprenant un matériau plastique auxiliaire, solidement ancrée à la deuxième surface (30) de la première couche (50).

3. Le matériau composite selon la revendication 2, dans lequel le matériau plastique auxiliaire de la couche auxiliaire (60) est identique au premier matériau plastique de la première couche (50).

4. Le matériau composite selon l'une quelconque des revendications de 1 à 3, dans lequel un pourcentage des particules (40) de matériau magnétisable, magnétisé ou métallique de la première couche (50) est compris entre 1 et 50 %, de préférence entre 5 et 15 %, calculé comme un poids des particules (40) de matériau magnétisable, magnétisé ou métallique divisé par un poids du matériau composite.

5. Le matériau composite selon l'une quelconque des revendications de 1 à 4, dans lequel le matériau magnétisable, magnétisé ou métallique est de l'acier inoxydable martensitique.

6. Le matériau composite selon l'une quelconque des revendications de 1 à 5, dans lequel le premier matériau plastique de la première couche (50) et optionnellement le matériau auxiliaire de la couche auxiliaire (60) est du polyuréthane.

7. Le matériau composite selon la revendication 6, dans lequel le polyuréthane est obtenu par réaction entre 4-4'-diisocyanate de diphénylméthane, un composant sélectionné entre le polyéther et le polyester et au moins un agent de traitement.

8. Un article plastique réalisé dans le matériau composite selon l'une quelconque des revendications de 1 à 7.

9. Un procédé pour obtenir des articles (70) réalisés dans le matériau composite selon les revendications de 1 à 7, dans lequel un appareil est utilisé pour le moulage par rotation, **caractérisé en ce qu'**il comprend les phases consistant à :
a) introduire un mélange dans l'appareil, ledit mélange étant sous forme liquide, granulaire ou pulvérulente, comprenant un premier matériau plastique et des particules (40) de matériau magnétisable, magnétisé ou métallique ;
b) mettre le mélange en rotation jusqu'à solidification de celui-ci, pour définir un article creux (70) correspondant réalisé dans le matériau composite ;
c) extraire l'article creux (70) réalisé dans le matériau composite, obtenu à la fin de la phase b), de l'appareil.

10. Un article comprenant un élément de renforcement, comprenant en outre au moins partiellement un matériau composite selon les revendications de 1 à 7.

11. L'article selon la revendication précédente, dans lequel l'élément de renforcement est un textile, un tissu à mailles ou des fils ou câbles tressés, et dans lequel l'élément de renforcement est réalisé en polyester, nylon, acier, fibres de carbone ou fibres Kevlar.

12. L'article selon l'une quelconque des revendications de 10 à 11, comprenant une courroie de transmission.

13. L'article selon l'une quelconque des revendications de 10 à 11, comprenant une courroie, en particulier une courroie pour un transporteur, qui peut être dentée ou lisse.

14. L'article selon l'une quelconque des revendications de 10 à 11, obtenu par moulage par rotation en disposant l'élément de renforcement le long de la surface opérationnelle intérieure d'un appareil de moulage par rotation.
